# EUROPÄISCHE PATENTSCHRIFT

(11) **EP 1 282 731 B1**
(45) Veröffentlichungstag und Bekanntmachung des Hinweises auf die Patenterteilung: **19.04.2006**
(21) Anmeldenummer: 01933449.9
(22) Anmeldetag: 15.05.2001
(51) Int. Cl.: C13D 1/00, A23L 3/3472, A23L 3/3508, A23L 1/09

(54) **VERFAHREN ZUR HERSTELLUNG VON ZUCKER MIT HILFE VON HARZEN**
METHOD FOR PRODUCING SUGAR BY AID OF RESINS
PROCEDE DE PRODUCTION DE SUCRE A L'AIDE DE RESINES

(30) Priorität: 16.05.2000 AT 8472000
(43) Veröffentlichungstag der Anmeldung: 12.02.2003
(73) Patentinhaber: ZUCKERFORSCHUNG TULLN GESELLSCHAFT M.B.H., A-3430 Tulln (AT)
(72) Erfinder: POLLACH, Günter, A-2301 Grossenzersdorf (AT); HEIN, Walter, A-1190 Wien (AT)
(74) Vertreter: Alge, Daniel
(86) Internationale Anmeldenummer: PCT/AT2001/000142
(87) Internationale Veröffentlichungsnummer: WO 2001/088205

(56) Entgegenhaltungen:
- EP-A- 0 681 029
- WO-A-00/18380
- WO-A-00/56938
- WO-A-01/05254
- WO-A-01/06877
- WO-A-98/18321
- "Ullmann's Encyclopedia of Industrial chemistry Vol A 23" 1993, VCH PUBLISHERS INC , XP002177447 in der Anmeldung erwähnt Seite 73 - Seite 88
- VAN DER POEL ET AL.: "Sugar Technology (Beet and cane sugar manufacture)" 1998, VERLAG DR ALBERT BARTENS , BERLIN , XP002177448 Seite 998, Absatz 2 - Seite 1000, Absatz 2
- DATABASE WPI Section Ch, Week 198038 Derwent Publications Ltd., London, GB; Class B04, AN 1980-66675C XP002177449 & JP 55 081816 A (HIKAMIYA O) 20. Juni 1980 (1980-06-20)

## Beschreibung

Die Erfindung betrifft ein Verfahren zur Herstellung von Zucker oder zuckerhaltigen Produkten aus zuckerhaltigen pflanzlichen Rohstoffen.

Zucker (Saccharose) und Zuckerprodukte werden vorwiegend aus den pflanzlichen Rohstoffen Zuckerrübe und Zuckerrohr gewonnen, indem diese Pflanzen mechanisch zerkleinert und zuckerhaltige Lösungen aus den Pflanzenteilen extrahiert bzw. ausgepresst werden.

Alle zuckerhaltigen Medien, insbesondere solche, die unmittelbar aus landwirtschaftlichen Rohstoffen gewonnen werden, sind innerhalb gewisser Temperaturbereiche, pH-Werte und Konzentrationsgrenzen einem mikrobiologischen Verderb durch Bakterien, Hefen und Schimmelpilzen ausgesetzt. Die Gefahr des Befalls durch Mikroorganismen bedeutet in einem lebensmitteltechnologischen Prozess, sowohl im kontinuierlichen Betrieb als auch bei einer Lagerung von Roh- und Zwischenprodukten, immer ein erhebliches Risiko. Mikroorganismen können in den Rohstoffen enthaltene Zucker zu Säuren und gasförmigen, teilweise sogar explosiven Stoffwechselprodukten abbauen oder einen übermäßig hohen Keimgehalt der Endprodukte verursachen. Beim Prozess der Zuckergewinnung aus Rüben und Zuckerrohr kommt die Gefahr einer mikrobiellen Spaltung des Disaccharids Saccharose in die Monosaccharide Glucose und Fructose hinzu, was neben dem unmittelbaren Saccharoseverlust auch mit weiteren Nachteilen verbunden ist, da z.B. dadurch eine stärkere Sirupverfärbung, ein erhöhter Bedarf an Alkalisierungsmitteln und ein erhöhter Anfall an Melasse verursacht werden.

Bei Temperaturen bis zu 50°C, welche bei einer Saftgewinnung mit mechanischer Zellöffnung angewendet werden, sind die zuckerhaltigen Extraktionslösungen dem Verderb durch alle genannten Mikroorganismen, d.h. Hefen, Schimmelpilze und Bakterien, ausgesetzt.
Bei einer Saftgewinnung mit thermischer Zellöffnung, welche bei Temperaturen von über 50°C stattfindet, sind hingegen nur mehr thermophile Bakterien vermehrungsfähig. Ein Beispiel für ein derartiges thermisches Extraktionsverfahren ist die derzeit allgemein durchgeführte Extraktion von Zuckerrüben zum Zweck der Zuckerproduktion.

Es ist üblich, thermophile Bakterien in Extraktionsanlagen dadurch zu bekämpfen, dass dem Saftstrom oder den verderblichen-Zwischenprodukten diskontinuierlich oder kontinuierlich keimhemmende bzw. keimtötende Hilfsmittel zugesetzt werden. Beispielsweise sind in der Zuckerindustrie hierfür Formalin, Dithiocarbamate, Peressigsäure, Ammoniumbisulfit, quarternäre Ammoniumbasen usw. gebräuchlich.

In jüngster Zeit werden in manchen Zuckerfabriken dann, wenn eine Zugabe chemischer Mittel nicht erwünscht oder gesetzlich verboten ist, als natürliche Mittel zur Bekämpfung von Mikroorganismen auch Hopfenprodukte eingesetzt (WO 00/56938; EP-0 681 029 A; Pollach et al., Zuckerindustrie 124 (8) (1999), 622-637; Pollach et al., Zuckerindustrie 121 (2) (1996), 919-926; Hein et al., Zuckerindustrie 122 (12) (1997), 940-949). Dabei zeigte es sich, dass es zu diesem natürlichen Mittel noch keine echte Alternative gibt, weswegen es bisher nicht möglich war, bei Selektierung von Hopfensäure-resistenten Bakterienstämmen oder bei Adaptierung von Bakterienstämmen an Hopfenprodukte auf ein anderes natürliches Mittel überzugehen, um dadurch gegen eine solche Selektierung oder Adaptierung anzukämpfen. Darüberhinaus sind geeignete Hopfenprodukte mit wirtschaftlich vertretbarem Preis, wie Hopfen-β-Säuren, nur in begrenzter Menge als Nebenprodukt bei der Herstellung von Isoalpha-Säuren auf dem Markt verfügbar. Auch daraus ergibt sich der Bedarf an einem zusätzlichen natürlichen Hilfsmittel zur Bekämpfung der Mikroorganismen.

Im Stand der Technik ist lediglich die Verwendung von Baumharz bei der Herstellung von Retsina (einem Erzeugnis mit geringem Restzuckergehalt) bekannt.

In der WO 98/18321 wird eine Mikroemulsion, bestehend aus einem alkoxylierten, oberflachenaktiven Mittel und einer darin aufgelösten bioziden Substanz, beschrieben. Das alkoxylierte, oberflächenaktive Mittel kann dabei ein alkoxyliertes Harz (i.e. ein denaturiertes Harz) sein, insbesondere ein epoxyliertes Harz.

In der WO 01/06877 A wird die Oberflächenbehandlung von Lebensmitteln mit einer bakteriostatischen Zusammensetzung, enthaltend Hopfensäuren oder Hopfenharze beschrieben.

Der vorliegenden Erfindung liegt daher die Aufgabe zugrunde, ein Verfahren der eingangs geschilderten Art zur Verfügung zu stellen, mit welchem das Wachstum unerwünschter Mikroben im Rahmen des industriellen Herstellungsprozesses für Zucker unterdrückt werden kann.

Diese Aufgabe wird erfindungsgemäß gelöst mit einem Verfahren zur Herstellung von Zucker oder zuckerhaltigen Produkten aus zuckerhaltigen pflanzlichen Rohstoffen, welches dadurch gekennzeichnet ist, dass die Herstellung zumindest teilweise in Anwesenheit von zugesetzten natürlichen lebensmittelkompatiblen Harzen durchgeführt wird, wobei als natürliche Harze Baumharze eingesetzt werden.

Überraschenderweise konnte mit dem Zusatz von derartigen Harzen im Zuge des industriellen Zuckerherstellungsprozesses eine effiziente und kostengünstige Möglichkeit zur Verfügung gestellt werden, mit welchem das Wachstum von unerwünschten Mikroben wirksam hintangehalten werden kann. Insbesondere thermophile und/oder osmophile Mikroorganismen, die besonders hartnäckige und schwer zu bekämpfende Störungsquellen beim Zuckerherstellungsprozess darstellen, können mit dem erfindungsgemäßen Zusatz von lebensmittelkompatiblen Harzen inaktiviert werden.

Dabei ist es nicht unbedingt erforderlich, dass diese Harze während des gesamten Herstellungsprozesses anwesend sind. Erfindungsgemäß kann der Einsatz der Harze auch nur in ausgewählten Teilprozessen erfolgen. Die teilweise bzw. zeitweilige Anwesenheit der zugesetzten Harze hat sich erfindungsgemäß vor allem bei denjenigen Bedingungen bewährt, bei welchen thermophile und osmophile Mikroorganismen besonders gut gedeihen würden. Gleichwohl eignet sich der erfindungsgemäße Zusatz von Harzen auch für niedrigere Temperaturen, insbesondere weil sich gezeigt hat, dass auch bei diesen Temperaturen hierbei selektiv unerwünschte Keime reduziert bzw. unterdrückt werden können.

Als pflanzliche Rohstoffe kommen erfindungsgemäß selbstverständlich vor allem Zuckerrübe und Zuckerrohr in Betracht. Das erfindungsgemäße Verfahren ist aber prinzipiell auf alle möglichen pflanzlichen Ausgangsstoffe anwendbar, wie z.B. bei der Zuckerproduktion ausgehend von Zuckerpalmen, Datteln, Zuckermais, Baumsäften, wie z.B. Ahornsaft, usw..

Es zeigte sich, dass die erfindungsgemäß zugesetzten Harze auch in dem vorwiegend wässerigen Milieu bei der Zuckerherstellung antimikrobiell wirksam sind. Bislang war man - auf Grund der guten Löslichkeit dieser Produkte in alkoholischen Lösungen - davon ausgegangen, dass derartige Produkte nur in alkoholischen Lebensmitteln (Retsina) mit Alkoholgehalten von beispielsweise 10 % oder darüber Verwendung finden können. Es zeigte sich aber erfindungsgemäß, dass die zugesetzten lebensmittelkompatiblen Baumharze auch bei der Zuckerherstellung in effizienter Weise und in effizienten Konzentrationen großtechnisch eingesetzt werden können.

Erfindungsgemäß können sämtliche lebensmittelkompatiblen Baumharze, wie sie beispielsweise in "Ullmann's Encyclopedia of Industrial Chemistry", Vol. A 23 (1993), Seiten 73-88, beschrieben sind, eingesetzt werden, wie beispielsweise Balsame, wie z.B. Benzoe, Kiefernbalsam, Myrrhe und Tolubalsam. Aus Gründen der Wirtschaftlichkeit werden erfindungsgemäß vor allem Kolophonium-Produkte und Derivate erfindungsgemäß bevorzugt. Derartige Produkte sind beispielsweise in Ullmann's Encyclopedia of Industrial Chemistry, Vol. A 23 (1993), auf den Seiten 79-88 beschrieben.

Bevorzugterweise werden erfindungsgemäß vor allem die ebendort beschriebenen Kolophonium(-Präparate) oder Kolophoniumderivate als natürliche Baumharze eingesetzt. Vorzugsweise wird dabei ein gelöstes, emulgiertes bzw. dispergiertes oder pastöses Kiefernharzprodukt eingesetzt, vorzugsweise auf Basis von Kiefernharz, Kiefernbalsam, Kiefernharzsäuren, Salzen der Kiefernharzsäuren (Harzseifen), nicht-denaturierten Derivaten von Kiefernharzen (i.e. Derivate, die ohne Einfluss von starken Säuren oder Basen erhalten werden), eingesetzt. Als Kolophoniumderivate werden erfindungsgemäß auch chemisch synthetisierte oder aus Kolophoniumprodukten isolierte Einzelkomponenten des Kolophoniums verstanden, wie beispielsweise Lävopimarsäure, Neoabietinsäure, Palustrinsäure, Abietinsäure, Dehydroabietinsäure, Tetrahydroabietinsäure, Dihydroabietinsäure, Pimarsäure und Isopimarsäure. Die Derivatisierung von Kolophonium kann weiters die Hydrierung, Polymerisierung, Additionsreaktionen, Veresterung, Nitrilierung, Aminierung, etc. vorsehen.

Vorzugsweise können auch geschmolzene und/oder mit Viskositätsminderern, wie z.B. Alkohol oder Glycerin, versetzte Produkte verwendet werden. So ist es z.B. möglich, mit beheizten Rohrleitungen aus einem Schmelzkessel Kolophonium in eine Extraktionsanlage zu dosieren.

Bei den genannten Kiefernharzprodukten handelt es sich um physio-logisch unbedenkliche Naturprodukte, welche z.B. in Form von geharztem Wein seit vielen Jahrhunderten von Menschen konsumiert werden. Kolophonium als Komponente des Brauerpechs, welches zum Abdichten von Bierfässern eingesetzt wurde, ist ebenso wie dessen Hauptbestandteil Abietinsäure auf Grund der langen Erfahrung als unbedenklich anzusehen. Kiefernharzprodukte werden auch in Kaugummis eingesetzt, wobei toxikologische Studien an Menschen auch nach 25 Jahren keine Hinweise auf gesundheitliche Gefahren gezeigt haben. Kiefernharze und Kolophonium sind an sich oder in Form von Derivaten, vor allem für Verpackungen, welche mit Lebensmitteln in Berührung kommen, in zahlreichen Ländern zugelassen.

Obwohl seit vielen Jahrhunderten dem Wein zu dessen Konservierung Kiefernharze zugesetzt werden, gibt es selbst in umfangreichen technischen Enzyklopädien keinen Hinweis auf eine Bekämpfung von Mikroorganismen durch Kiefernharze oder dessen Komponenten in technischen, vorzugsweise Lebensmittel-technologischen Prozessen (vgl. Ullmann, 5. Aufl., Bd. A23, Seiten 73 bis 88).

Kiefernharze wurden bisher für Farben, Lacke, Beschichtungen, Tinten, Kleber, Gummi, Reifen, weiters in der Medizin zur Herstellung von Salben und im kosmetischen Bereich eingesetzt. Die Kolophoniumkomponente Abietinsäure wurde auch zur Förderung von Milchsäure- und Buttersäuregärungen eingesetzt. Umso überraschender ist die erfindungsgemäße Wirkung zur Keimhemmung im Rahmen des Zuckerherstellungsprozesses anzusehen.

Als vorteilhaft hat sich erfindungsgemäß der Zusatz einer wässerigen leicht alkalischen Salzlösung oder einer alkoholischen Lösung von Baumharzen, insbesondere von Kolophonium oder Kolophoniumderivaten, erwiesen. Ebenso kann es in manchen Fällen günstig sein, das Mittel in trockener Form zu verwenden. Feste, gemahlene Produkte, z.B. Kolophonium, können z.B. durch Einstreuen durch die Öffnungen eines Extraktionstroges hindurch eingebracht werden.

Es hat sich erfindungsgemäß gezeigt, dass die natürlichen Baumbarze bevorzugt in einer Menge von 0,1 bis 1000 mg/l eingesetzt werden sollten. Die zumindest teilweise bzw. zumindest zeitweilig gegebene Anwesenheit von den natürlichen Harzen in dieser Menge in der flüssigen Phase während des Zuckerherstellungsprozesses hat sich als günstig herausgestellt. Es ist aber klar, dass je nach Realisierung des Zuckerherstellungsprozesses (kontinuierlich/diskontinuierlich) die Konzentration an den Harzen schwanken kann, insbesondere, wenn die Harze stoßweise dem Herstellungsprozess zugesetzt werden, beispielsweise in die Extraktionslösung. Besonders bevorzugte Konzentrationsmengen der erfindungsgemäß zu verwendenden Harze während des Herstellungsprozesses liegen bei 5 bis 40 mg/l, insbesondere 10 bis 25 mg/l.

Bevorzugterweise werden die erfindungsgemäßen natürlichen Harze als salzhaltige Lösungen oder Suspensionen zugesetzt. Bewährt haben sich dabei Kaliumsalzlösungen bzw. Natriumsalzlösungen, insbesondere in 0,5 bis 35 %iger Salzkonzentration. Bei Natriumsalzlösungen kann die optimale Salzkonzentration auch nur bis etwa 20 % gehen. Die natürlichen Harze können auch als alkoholische Lösungen oder Suspensionen zugesetzt werden, vorzugsweise als eine 1 bis 95 %ige, insbesondere als eine 10 bis 80 %ige Ethanollösung. Es hat sich gezeigt, dass die erfindungsgemäße Verwendung von natürlichen Baumharze sich besonders gut zur Kombination mit weiteren antimikrobiellen Mitteln im Zuge des Herstellungsprozesses eignet. Vorzugsweise werden im Rahmen einer derartigen Kombination weitere lebensmittelkompatible antimikrobielle Mittel eingesetzt.

Besonders bevorzugt ist hierbei die erfindungsgemäße Kombination mit Hopfen oder Hopfenderivaten. Zuckerherstellungsverfahren, bei welchen derartige Hopfen oder Hopfenderivate verwendet werden, sind z.B. in der EP 0 681 029 B1 beschrieben. Die Kombination der weiteren antimikrobiellen Mittel mit den natürlichen Harzen kann erfindungsgemäß sowohl parallel als auch seriell erfolgen. So kann beispielsweise der Zuckerherstellungsprozess zeitweilig unter Anwesenheit von zugesetzten Harzen und zeitweilig unter Anwesenheit von Hopfenprodukten, beispielsweise Hopfen-β-säuren, erfolgen und zwar sowohl nacheinander als auch miteinander.

Die erfindungsgemäße Zugabe von lebensmittelkompatiblen Baumharze, insbesondere Kolophonium oder Kolophoniumderivaten, kann zu jedem Punkt der Zuckerherstellung erfolgen: beispielsweise kann bereits bei der Lagerung des pflanzlichen Rohmaterials (z.B. von Zucker-rüben oder Zuckerrohr) dieses Material mit einer harzhaltigen Lösung besprüht werden. Bevorzugterweise sind aber die natürlichen Harze zumindest bei der thermischen Extraktion von zuckerhaltigen Pflanzenteilen, insbesondere Zuckerrüben oder Zuckerrohr, anwesend. Hierbei kann man beispielsweise Baumharze den zu extrahierenden Pflanzenteilen nach der mechanischen Zerkleinerung der zuckerhaltigen pflanzlichen Rohstoffe zugeben.

Eine Darstellung des üblichen Herstellungsprozesses für Zucker ist beispielsweise in Ullmann's Encyklopädie der Technischen Chemie, 4. Aufl., Bd. 24, Seiten 703 bis 748 enthalten, wobei der erfindungsgemäße Zusatz von natürlichen Harzen bei all den dort geschilderten (Teil-)Schnitten vorgenommen werden kann.

Bevorzugterweise werden die natürlichen Baumharze erfindungsgemäß der Extraktionslösung, mit der der Zucker aus den zuckerhaltigen Pflanzen in Rohstoffen extrahiert wird, zugegeben.

Gemäß einer bevorzugten Ausführungsform des erfindungsgemäßen Verfahrens werden die natürlichen Baumharze bei der Reinigung des Rohsaftes, vorzugsweise in Stufen mit niedrigen pH-Werten, verwendet.

Gemäß einer besonders bevorzugten Ausführungsform, bei welcher sich die erfindungsgemäßen Baumharze besonders bewährt haben, werden Membranbehandlungsverfahren oder Ionenaustauscherverfahren im Zuge des Zuckerherstellungsprozesses in Anwesenheit der natürlichen Harze durchgeführt.

Vorzugsweise werden die natürlichen Baumharze bei einer Zuckerkonzentration von 0,1 bis 80 % eingesetzt, insbesondere bei höheren Temperaturen, etwa bei Temperaturen von 50 bis 80°C. Besonders bewährt hat sich der erfindungsgemäße Zusatz von Harzen im Rahmen der Dicksaftproduktion und Lagerung, so dass die natürlichen Harze besonders bei Zuckerkonzentrationen von 60 bis 70 %, insbesondere bei einer Temperatur von 10 bis 30°C, eingesetzt werden.

Schließlich hat sich auch die Anwesenheit von Harzen während der Gewinnung des Zuckers aus dem Dicksaft als besonders geeignet herausgestellt.

Die Gefahr des Eintrages bitterer Geschmacksstoffe in die Zuckerprodukte, welche bei Hopfenprodukten bestanden hat, ist im Fall von Baumharzen, wie Kiefernharzprodukten, deshalb nicht gegeben, da die Kiefernharze nicht bitter schmecken. So ist z.B. Kolophonium geschmacksneutral.

Die Behandlung mit einem Mittel auf Kiefernharzbasis wird mit besonderem Vorteil alternierend zu einer Behandlung mit einem Mikroorganismen hemmenden Mittel auf Hopfenbasis vorgenommen, um eine Adaptierung der Mikroorganismen an das Hopfenpräparat bzw. eine Selektierung von hopfenresistenten Mikroorganismen zu bekämpfen.

Wird in einem Prozess keinerlei Selektierung oder Adaptierung beobachtet, kann ein kombiniertes Mittel, z.B. aus Kiefernharzen und Hopfenprodukten, angewendet werden, um eine besonders hohe Wirksamkeit eines einzigen Kombinationsmittels zu erreichen.

Wenn ein zuckerhaltiges Substrat, z.B. ein zuckerhaltiger flüssiger Nährboden, wie er in der Mikrobiologie üblich ist, entweder unsterilisiert oder nach Einimpfung eines Bakterienstammes bebrütet wird, kommt es zu einer Säurebildung, welche am einfachsten an einem pH-Abfall erkannt werden kann. Das gleiche Phänomen tritt bei der Bebrütung von normalen zuckerhaltigen Pflanzensäften, z.B. Rübensäften, auf. Ein pH-Abfall durch Zuckerabbau bedeutet in einem industriellen Prozess, z.B. dem der Gewinnung von Zuckersaft aus Zuckerrüben, einen Zuckerverlust und einen Bedarf an Alkalisierungsmittel. Außerdem ist ein pH-Abfall mit einer Erhöhung des Keimgehaltes im Substrat und zudem oftmals mit einer unangenehmen Gas- und Nitritbildung verbunden.

Soferne während der durch thermophile Mikroorganismen bei höheren Temperaturen verursachten Säurebildung z.B. eine Lösung von Kiefernharzsäuren zugesetzt wird, kommt es ab einer Konzentration von etwa 10 - 30 mg/Liter zum Stoppen der Säurebildung und des damit verbundenen pH-Abfalls. Somit können die mit Säurebildung verbundenen Nachteile durch Zugabe von z.B. Kiefernharzen oder Kolophonium zu einem zuckerhaltigen Substrat vermieden werden. Vorzugsweise wird deshalb bei erhöhten Temperaturen gearbeitet, da die Hauptkomponenten der Kiefernharze, nämlich die Harzsäuren, in kalten wässerigen Systemen weniger gut löslich sind als in warmen Systemen. Sie können daher schon wegen der besseren Löslichkeit besonders gut bei höheren Temperaturen gegen thermophile Mikroorganismen eingesetzt werden. Außerdem ist bei hohen Temperaturen die Mikroorganismenflora auf wenige Bakterienarten beschränkt. Bei niedrigeren Temperaturen kann man demgemäß die Menge an zugesetztem Harz erhöhen, um zu vergleichbaren Wirkungen zu gelangen.

Bei leicht alkalischen Zuckersäften ermöglicht die stärkere Dissoziation der Harzsäuren eine bessere Löslichkeit und daher ist man bei einer Anwendung im leicht alkalischen Bereich nicht auf die bessere Löslichkeit bei höheren Temperaturen angewiesen. Es ist daher möglich, bei Vorliegen leicht alkalischer Bedingungen osmotolerante Mikroorganismen auch bei normalen Temperaturen mit den in wässerigen Systemen schwer löslichen Harzsäuren zu bekämpfen, wenngleich dafür höhere Wirkstoffkonzentrationen notwendig sind als beim Einsatz gegen thermophile Mikroorganismen.

Gegenüber Hefen weisen die natürlichen Harze, z.B. die Kiefernharzsäuren, überraschenderweise eine deutlich geringere Wirksamkeit als gegenüber thermophilen Bakterien auf. Außerdem sind sie unter den pH- und Temperaturbedingungen der Hefezüchtung schlecht löslich, so dass die von Hopfenprodukten bekannten Eigenschaften, welche in erster Linie eine Hemmung der Bakterien bewirken, auch bei Kiefernharzen auftreten. Restmengen von Kiefernharzsäuren in Melassen, welche zur Verwertung durch Hefen bestimmt sind, können daher im vergleich zu manchen chemischen Mitteln, wie quarternären Ammoniumbasen, als unbedenklich angesehen werden.

Gemäß einem weiteren Aspekt betrifft die vorliegende Erfindung auch die Verwendung einer Extraktionsflüssigkeit zur Extraktion zuckerhaltiger pflanzlicher Rohstoffe im Zuge des industriellen Zuckerherstellungs prozesses, welche zusätzlich zu den üblichen Bestandteilen dieser Extraktionsflüssigkeit natürliche Baumharze, insbesondere Kolophonium oder Kolophoniumderivate enthält. Derartige Extraktionsflüssigkeiten enthalten neben dem extrahierten Zucker (Saccharose), Glucose und Fructose in Spuren, sowie Bestandteile, die für den jeweiligen pflanzlichen Rohstoff charakteristisch sind, beispielsweise Betain (bei Zuckerrüben) oder Aconitsäure (bei Zuckerrohr). Weitere Inhaltsstoffe können Aminosäuren, wie, Alanin, Asparagin- und Glutaminsäure, Isoleucin, Leucin, Threonin oder Valin (im Bereich 10 - 200 mg/l Rohsaft), Oxalat, Citrat, Lactat oder Maleat (10 - 5000 mg/l Rohsaft) bzw. Shikimisäure oder flavonoide oder phenolische Komponenten wie Coffeinsäure, 3,4-Dihydroxybenzoesäure, Chlorogensäure, Apigenin, Swertisin, Luteoline oder Tricin, sein. (Schneider, "Technologie des Zuckers". Verlag Schaper, Hannover (1968), 247-253; van der Poel et al., "Sugar Technology", Verlag Dr. Bartens, Berlin (1998), 152-157; van der Poel et al., "Zuckertechnologie", Verlag Dr. Bartens, berlin (2000), 163-168).

Gemäß einer bevorzugten Auführungsform enthält die erfindungsgemäße Extraktionsflüssigkeit zusätzlich auch Hopfen oder Hopfenderivate.

Gemäß einem weiteren Aspekt betrifft die vorliegende Erfindung auch Zucker oder zuckerhaltige Produkte aus pflanzlichen Rohstoffen, ausgewählt aus Rübenschnitzel-Futtermittel, Carbokalk, Dicksaft und Melasse, die nach dem erfindungsgemäßen Verfahren erhältlich sind und demgemäß einen (Rest-)Gehalt an zugesetzten natürlichen lebensmittelkompatiblen Baumharzen, insbesondere Kolophonium oder Kolophoniumderivaten, enthalten. Dieser Gehalt lässt sich ohne weiteres mit an sich bekannten analytischen Verfahren, wie Gaschromatographie, HPLC, etc., nachweisen. Erfindungsgemäß bevorzugte Zucker oder zuckerhaltige Produkte weisen einen Harzgehalt beginnend mit der Nachweisgrenze bis zu einer Konzentration von 1 Gew.-‰ oder - wenn der Harzgeschmack besonders betont werden soll - darüber auf (also auch im ein- bis sogar zweistelligen %-Bereich). Rübenschnitzel-Futtermittel, das z.B. als gepresstes Produkt zur Verfügung gestellt wird, stellt ein besonders günstiges Wachstumsmilieu für unerwünschte Mikroorganismen dar. Ein derartiger Befall kann natürlich die Futtermittelqualität dieser Produkte entscheidend beeinträchtigen. Die Anwesenheit von zugesetzten natürlichen Baumharzen verringert hierbei nicht nur derartige Produktschädigungen durch Fehlgärungen, sondern auch die Entstehung unerwünschter Geruchsbelästigung. Beispielsweise ist das im Rahmen des Zuckerprozesses ausgefällte Calcium ("Carbokalk"), welches als Düngemittel verwendet wird, oft mit Clostridien befallen. Durch deren Wachstum kommt es häufig zu einer unerwünschten Geruchsbelästigung, so dass ein Transport dieses Düngers gewöhnlich nur in geschlossenen Behältnissen erfolgen kann. Auch hier könnte sich der erfindungsgemäße Zusatz von natürlichen Baumharzen zur Verbesserung der Haltbarkeit und Transportierbarkeit von Carbokalk bewähren, indem die Geruchsentstehung entscheidend verringert bzw. unterbunden wird. Melasse ist ebenfalls ein wichtiges Ausgangsprodukt für Futtermittel, als Fermentationsrohstoff, zur chromatographischen Auftrennung (Saccharose- und Betaingewinnung) und als Brikettierhilfsmittel und ist daher - ebenso wie Dicksaft - ein für sich verkehrsfähiges Produkt, welches auch gelagert werden kann bzw. muss. Der erfindungsgemäße Zusatz von lebensmittelkompatiblen Baumharzen zu derartigen Produkten, insbesondere im Zuge des industriellen Zuckerherstellungsprozesses, bewegt bei derartigen Produkten eine entscheidende Verländerung der Haltbarkeit, eine Verbesserung der Lagerfähigkeit sowie eine Hintanhaltung von Produktveränderungen durch die Aktivität von unerwünschten Mikroorganismen.

Übliche (Rest-)konzentrationen an zugesetzten Baumharzen in ausgewählten Endprodukten bewegen sich bei Zucker vorzugsweise von 1 ng - 10 mg, insbesondere von 100 ng - 500 µg, und bei Melasse vorzugsweise von 10 µg - 1 g, insbesondere von 1 bis 100 mg.

Gemäß einem weiteren Aspekt betrifft die vorliegende Erfindung auch die Verwendung von natürlichen Baumharzen, insbesondere Kolophonium oder Kolophoniumderivaten, bei der Herstellung von Zucker. Hierbei ist insbesondere die Verwendung zur Hemmung thermophiler und osmotoleranter Mikroorganismen, insbesondere zur Hemmung von Bacillus, Thermus und Clostridien, bevorzugt.

Die Erfindung wird an Hand der nachfolgenden Beispiele näher erläutert.

### Beispiel 1 :

Ein flüssiges Nährmedium, wie es in der Mikrobiologie gebräuchlich ist und das aus 10 g Bacto-Pepton, 5 g Fleischextrakt, 5 g Hefeextrakt, 1 g Glucose, 1 g K₂HPO₄, 0,3 g KNO₃, 0,1 g MgSO₄*7H₂O und 0,01 g FeSO₄*7H₂O pro Liter destilliertem Wasser besteht, wird in üblicher Weise 20 min bei 120°C sterilisiert und in einem auf 65°C temperierten Gefäß von 500 ml Inhalt mit 20 ml Rohsaft aus einer großtechnischen Zuckerrübenextraktion beimpft, wobei der pH-Wert auf einem Schreiber registriert wird. Nach dem Anwachsen von thermophilen Bakterien fällt der pH-Wert progressiv ab. Dies zeigt die Mikroorganismenaktivität durch Säurebildung an.

Im vorliegenden Beispiel zeigt sich nach Zugabe von bis zu 300 µl 5 %iger alkoholischer Lösung eines Kiefernharzes pro Liter Kulturflüssigkeit noch kein Einfluss auf den pH-Abfall. Nach Zusatz von weiteren 100 µl stoppt jedoch die Säurebildung schlagartig und der pH-Wert bleibt 2 Stunden lang konstant. Daraus ergibt sich im vorliegenden Fall eine mindestens zweistündige Wirksamkeit bei einer Konzentration von 20 mg Kiefernharz pro Liter Kulturflüssigkeit.

| Zeit(h) | 0 | 0,5 | 1 | 1,5 | 2 | 2,5 | 3 | 3,5 | 4 | 4,5 | 5 | 5,5 | 6 | 6,5 |
|---|---|---|---|---|---|---|---|---|---|---|---|---|---|---|
| pH | 6,88 | 6,86 | 6,84 | 6,84 | 6,83 | 6,82 | 6,82 | 6,80 | 6,60 | 6,37 | 6,27 | 6,27 | 6,27 | 6,28 |
| ΔpH/h | | 0,04 | 0,04 | 0,00 | 0,02 | 0,02 | 0,00 | 0,04 | 0,40 | 0,46 | 0,20 | 0,00 | 0,00 | -0,02 |
| Zusatz von Lösung: 200 µl bei pH 6,31 plus 100 µl bei pH 6,29 plus 100 µl bei pH 6,27. | | | | | | | | | | | | | | |

### Beispiel 2:

Ein Rohsaft aus einer Rübenzuckerfabrik wird auf 2 % Trockensubstanz verdünnt, um Konzentrationsverhältnisse im oberen Teil von Rübenextraktionsanlagen zu simulieren. Der verdünnte Saft wird bei 65°C gerührt. Durch Anwachsen von Mikroorganismen setzt ein pH-Abfall ein, der durch Zusatz von 5 %iger alkoholischer Kiefernharzlösung gestoppt werden kann. Es sind 600 µl Lösung pro Liter Saft notwendig, um die Säurebildung in diesem Beispiel zu stoppen. Dies entspricht 30 mg Kiefernharz pro Liter Kulturflüssigkeit.

| | | | | | | | |
|---|---|---|---|---|---|---|---|
| Zeit(h) | 0 | 0,5 | 1 | 1,5 | 2 | 2,5 | 3 |
| pH | 6,55 | 6,57 | 6,57 | 6,57 | 6,42 | 6,01 | 6,01 |
| ΔpH/h | | 0,04 | 0,00 | 0,00 | 0,30 | 0,82 | 0,00 |
| Zusatz von Lösung: 200 µl bei pH 6,09 plus 4 x 100 µl zwischen pH 6,07 und pH 6,01. | | | | | | | |

### Beispiel 3 :

Ein flüssiges Nährmedium wie in Beispiel 1, jedoch im Verhältnis 1 : 1 mit sterilem destillierten Wasser verdünnt, wird bei 65°C mit einem hochthermophilen Stamm von Bacillus stearothermophilus (DSM Nr. 457) beimpft und das Anwachsen des Stammes wird durch pH-Registrierung verfolgt. Durch Zugabe von 500 µl 5 %iger alkoholischer Kiefernharzlösung pro Liter Kulturflüssigkeit kann der pH-Abfall in diesem Beispiel gestoppt werden; das entspricht 25 mg Kiefernharz pro Liter.

| | | | | | | | | |
|---|---|---|---|---|---|---|---|---|
| Zeit(h) | 0 | 0,5 | 1 | 1,5 | 2 | 2,5 | 3 | 3,5 |
| pH | 6,85 | 6,82 | 6,79 | 6,94 | 6,57 | 6,23 | 6,27 | 6,28 |
| ΔpH/h | | 0,06 | 0,06 | 0,10 | 0,34 | 0,68 | -0,08 | -0,02 |
| Zusatz von Lösung: 200 µl bei pH 6,29 plus 3 x 100 µl zwischen pH 6,27 und pH 6,23. | | | | | | | | |

### Beispiel 4 :

Ein flüssiges Nährmedium wie in Beispiel 1 wird mit 20 ml Rohsaft aus einer Zuckerfabrik beimpft, bei 65°C gerührt und der pH-Abfall wird verfolgt. Es wird anstelle von alkoholischer Lösung eine 5 %ige wässerige Lösung eines Kiefernharzes verwendet, in welcher die Harzsäuren im Gleichgewicht mit Natriumionen vorliegen. Durch Zugabe von 300 µl Lösung pro Liter Kulturflüssigkeit, das entspricht 15 mg Kiefernharz pro Liter, kann der pH-Abfall gestoppt werden.

| Zeit(h) | 0 | 0,5 | 1 | 1,5 | 2 | 2,5 | 3 | 3,5 | 4 | 4,5 | 5 | 5,5 | 6 |
|---|---|---|---|---|---|---|---|---|---|---|---|---|---|
| pH | 7,06 | 6,99 | 6,97 | 6,97 | 6,96 | 6,96 | 6,96 | 6,94 | 6,89 | 6,72 | 6,41 | 6,42 | 6,42 |
| ΔpH/h | | 0,14 | 0,04 | 0,00 | 0,02 | 0,00 | 0,00 | 0,04 | 0,10 | 0,34 | 0,62 | -0,02 | 0,00 |
| Zusatz von Lösung: 200 µl bei pH 6,43 plus 1 x 100 µl bei pH 6,41 | | | | | | | | | | | | | |

### Beispiel 5 :

Ein flüssiges Nährmedium wie in Beispiel 1 wird bei 65°C mit einem hochthermophilen Stamm von Bacillus stearothermophilus (DSM Nr. 457) beimpft und das Anwachsen des Stammes wird durch pH-Registrierung verfolgt. Es wird anstelle von alkoholischer Lösung von Kiefernharz eine 1 %ige alkoholische Lösung von handelsüblihem Kolophonium verwendet. Durch Zugabe von 2 ml pro Liter Kulturflüssigkeit, das entspricht 20 mg Kolophonium pro Liter, kann der pH-Abfall mehrere Stunden lang gestoppt werden.

| Zeit (h) | 0 | 0,5 | 1 | 1,5 | 2 | 2,5 | 3 | 3,5 | 4 | 4,5 | 5 | 5,5 | 6 | 6,5 |
|---|---|---|---|---|---|---|---|---|---|---|---|---|---|---|
| pH | 6,90 | 6,90 | 6,88 | 6,86 | 6,81 | 6,63 | 6,33 | 6,43 | 6,44 | 6,44 | 6,44 | 6,44 | 6,44 | 6,44 |
| △pH/h | | 0 | 0,04 | 0,04 | 0,10 | 0,36 | 0.60 | -0,20 | -0,02 | 0 | 0 | 0 | 0 | 0 |
| Zusatz von Lösung: 200 ml bei pH 6,33 | | | | | | | | | | | | | | |

### Beispiel 6 :

Ein flüssiges Nährmedium wird wie in Beispiel 5 eingesetzt. Es wird anstelle von alkoholischer Kolophoniumlösung eine 1 %ige alkalische, wässerige Kolophoniumlösung verwendet, in welcher die Harzsäuren im Gleichgewicht mit Natriumionen vorliegen. Durch Zugabe von 1,4 ml pro Liter Kulturflüssigkeit, das entspricht 14 mg Kolophonium pro Liter, kann der pH-Abfall gestoppt werden.

| Zeit(h) | 0 | 0,5 | 1 | 1,5 | 2 | 2,5 | 3 | 3,5 | 4 |
|---|---|---|---|---|---|---|---|---|---|
| pH | 6,96 | 6,93 | 6,91 | 6,88 | 6,84 | 6,70 | 6,39 | 6,44 | 6,44 |
| ΔpH/h | | 0,06 | 0,04 | 0,06 | 0,08 | 0,28 | 0.62 | -0,10 | 0 |
| Zusatz von Lösung: 1,4 ml bei pH 6,37 | | | | | | | | | |

### Beispiel 7 :

Der pH-Abfall einer thermophilen Bakterienkultur gemäß Beispiel 1 kann von einer 20 %igen Lösung A von Kiefernharzsäuren-Kaliumsalz mit leichtem Alkali-Überschuss (pH 10) beim Erreichen einer Konzentration von 50 mg/l gestoppt werden. Eine handelsübliche Lösung B mit 10 % Hopfen-β-Säuren vermag den pH-Abfall bei 20 mg/l zu stoppen. Eine Mischung aus 3 Volumen Lösung A und 1 Volumen Lösung B vermag eine solche Kultur beim Erreichen von 30 mg/l zu stoppen. Gemäß Mischungsgleichung müsste erst bei (1 * 20 + 3 * 50) / 4 = 42,5 mg/l eine Wirkung eintreten. Eine Wirkung bei 30 mg/l demonstriert einen Wirkungsvorteil bei kombinierter Anwendung der beiden Wirkstoffe.

### Beispiel 8 :

Der pH-Wert eines Zuckerdicksaftes mit 60 % Trockensubstanz wurde durch osmotolerante Mikroorganismen vom ursprünglichen Wert 9 auf 8,4 abgesenkt. Durch Zugabe eines Mittels soll ein weiterer pH-Abfall vermieden oder zumindest hinausgezögert werden. Dem Saft werden Kiefernharzsäuren in einer Konzentration von 200 ppm in Form einer 20 %igen Natriumsalzlösung zugesetzt. Nach 5 Tagen Lagerung bei 22°C liegt der pH-Wert des auf diese Weise behandelten Saftes noch immer bei 8,39, während der pH-Wert des unbehandelten Saftes (Referenzmuster) bereits auf pH 6,55 abgefallen ist. Dies demonstriert die verzögernde Wirkung von Kiefernharz auf osmotolerante Mikroorganismen. Zum Vergleich ist auch ein Zahlenwert für 350 ppm Formaldehyd (100 %) angegeben.

| Beobachtungrszeit (Tage) | 0 | 1 | 2 | 5 | 0 | 1 | 2 | 5 |
|---|---|---|---|---|---|---|---|---|
| | pH-Wert | | | | pH-Abfall | | | |
| Kein Zusatz | 8,44 | 8,23 | 7,88 | 6,55 | 0 | 0,21 | 0,56 | 1,89 |
| 350 ppm HCHO | 8,44 | 8,05 | 7,96 | 7,77 | 0 | 0,39 | 0,48 | 0,67 |
| 200 ppm Kiefernharz | 8,44 | 8,44 | 8,43 | 8,39 | 0 | 0,00 | 0,01 | 0,05 |

### Beispiel 9:

Ein flüssiges Nährmedium wie in Beispiel 1 wird pro Liter mit 40 ml Rohsaft aus einer Zuckerfabrik beimpft, bei 65°C gerührt und der pH-Abfall wird verfolgt. Es wird eine Lösung von 15 mg reiner Neoabietinsäure (99 %) pro 1,5 ml Ethanol bereitet. Durch vier zugaben von je 0,2 ml Lösung pro Liter Kulturflüssigkeit, das entspricht insgesamt 8 mg Neoabietinsäure pro Liter, kann der pH-Abfall gestoppt werden.

| Zeit(h) | 0 | 1 | 2 | 3 | 3,5 | 4 | 4,5 | 5 | 5,5 | 5,8 | 6 | 6,5 | 7 | 8 |
|---|---|---|---|---|---|---|---|---|---|---|---|---|---|---|
| pH | 6,90 | 6,90 | 6,89 | 6,87 | 6,86 | 6,85 | 6,82 | 6,72 | 6,54 | 6,30 | 6,24 | 6,24 | 6,25 | 6,25 |
| ΔpH/h | | 0,00 | 0,01 | 0,02 | 0,02 | 0,02 | 0,06 | 0,20 | 0,36 | 0,80 | 0,30 | 0,00 | -0,02 | 0,00 |
| Zusatz von Lösung: je 0,2 ml bei pH-werten von 6,30 und 6,28 und 6,26 und 6,24 | | | | | | | | | | | | | | |

### Beispiel 10: Großtechnisches Beispiel

Eine Rübenextraktionsanlage zur kontinuierlichen Verarbeitung von 12.000 t Rüben pro Tag, bestehend aus einem Extraktionsturm und drei Gegenstromj-Schnitzelmaischen, wird ohne Zusatz von bekannten Mitteln zur Reduzierung der Bakterientätigkeit, wie Formalin und Dithiocarbamaten, betrieben. In der Anlage tritt eine Milchsäuregärung auf, die einen Milchsäuregehalt von 600 mg/l in dem aus der Anlage gewonnenen Rohsaft verursacht. Durch Dosierung einer 10 %igen Lösung von Harzsäuren als Natriumsalz, und zwar in Form von 6 Stößen pro Tag, wobei jeweils 200 Liter Lösung innerhalb von 2 min dosiert werden, kann der Milchsäuregehalt des Rohsaftes auf 300 mg/l abgesenkt werden, so dass sich der in der Anlage auftretende Zuckerverlust durch Milchsäurebildung deutlich reduziert.

## Patentansprüche

1. Verfahren zur Herstellung von Zucker oder zuckerhaltigen Produkten aus zuckerhaltigen pflanzlichen Rohstoffen, **dadurch gekennzeichnet, dass** die Herstellung zumindest teilweise in Anwesenheit von zugesetzten natürlichen lebensmittelkompatiblen Harzen durchgeführt wird, wobei als natürliche Harze Baumharze eingesetzt werden.

2. Verfahren nach Anspruch 1, **dadurch gekennzeichnet, dass** Kolophonium oder Kolophoniumderivate als natürliche Harze eingesetzt werden.

3. Verfahren nach Anspruch 1 oder 2, **dadurch gekennzeichnet, dass** die natürlichen Harze in einer Menge von 0,1 bis 1000 mg/l, vorzugsweise 5 bis 40 mg/l, insbesondere 10 bis 25 mg/l, eingesetzt werden.

4. Verfahren nach einem der Ansprüche 1 bis 3, **dadurch gekennzeichnet, dass** die natürlichen Harze als salzhaltige Lösungen oder Suspensionen zugesetzt werden, vorzugsweise als Kaliumsalzlösung, insbesondere als 0,5 bis 35 %ige Kaliumsalzlösung, oder als Natriumsalzlösung, insbesondere als 0,5 bis 35 %ige Natriumsalzlösung.

5. verfahren nach einem der Ansprüche 1 bis 4, **dadurch gekennzeichnet, dass** die natürlichen Harze als 5 bis 20 %ige salzhaltige Lösungen oder Suspensionen zugesetzt werden.

6. Verfahren nach einem der Ansprüche 1 bis 5, **dadurch gekennzeichnet, dass** die natürlichen Harze als alkoholische Lösung oder suspension, vorzugsweise als eine 1 bis 95 %ige, insbesondere als eine 10 bis 80 %ige Ethanollösung, zugesetzt werden.

7. Verfahren nach einem der Ansprüche 1 bis 6, **dadurch gekennzeichnet, dass** die natürlichen Harze in Kombination mit weiteren antimikrobiellen Mitteln eingesetzt werden.

8. Verfahren nach einem der Ansprüche 1 bis 7, **dadurch gekennzeichnet, dass** die natürlichen Harze in Kombination mit weiteren lebensmittelkompatiblen antimikrobiellen Mitteln, insbesondere in Kombination mit Hopfen oder Hopfenderivaten, eingesetzt werden.

9. Verfahren nach einem der Ansprüche 1 bis 8, **dadurch gekennzeichnet, dass** die natürlichen Harze in trockener oder pastöser Form zugegeben werden.

10. Verfahren nach einem der Ansprüche 1 bis 9, **dadurch gekennzeichnet, dass** die natürlichen Harze zumindest bei der thermischen Extraktion von zuckerhaltigen Pflanzenteilen, insbesondere von Zuckerrüben oder Zuckerrohr, verwendet werden.

11. verfahren nach einem der Ansprüche 1 bis 10, **dadurch gekennzeichnet, dass** die natürlichen Harze den zu extrahierenden Pflanzenteilen nach der mechanischen Zerkleinerung der zuckerhaltigen pflanzlichen Rohstoffe zugegeben werden.

12. Verfahren nach einem der Ansprüche 1 bis 11, **dadurch gekennzeichnet, dass** die natürlichen Harze der Extraktionslösung, mit der der Zucker aus den zuckerhaltigen pflanzlichen Rohstoffen extrahiert wird, zugegeben werden.

13. Verfahren nach einem der Ansprüche 1 bis 12, **dadurch gekennzeichnet, dass** die natürlichen Harze bei der Reinigung des Rohsaftes verwendet werden.

14. Verfahren nach einem der Ansprüche 1 bis 13 **dadurch gekennzeichnet, dass** die natürlichen Harze zumindest während Membranbehandlungsverfahren und/oder während Ionenaustauscherverfahren eingesetzt werden.

15. verfahren nach einem der Ansprüche 1 bis 14, **dadurch gekennzeichnet, dass** die natürlichen Harze bei einer Zuckerkonzentration von 0,1 bis 80 % eingesetzt werden, insbesondere bei einer Temperatur von 50 bis 80°C.

16. Verfahren nach einem der Ansprüche 1 bis 15, **dadurch gekennzeichnet, dass** die natürlichen Harze bei einer Zuckerkonzentration von 60 bis 70 % eingesetzt werden, insbesondere bei einer Temperatur von 10 bis 30°C.

17. Verfahren nach einem der Ansprüche 1 bis 16, **dadurch gekennzeichnet, dass** die natürlichen Harze während der Gewinnung des Zuckers aus dem Dicksaft eingesetzt werden.

18. Verwendung einer Extraktionsflüssigkeit, enthaltend natürliche lebensmittelkompatible Baumharze, insbesondere Kolophonium oder Kolophoniumderivate, zur Extraktion zuckerhaltiger pflanzlicher Rohstoffe im Zuge des industriellen Zuckerherstellungsprozesses.

19. Verwendung einer Extraktionsflüssigkeit nach Anspruch 18, **dadurch gekennzeichnet, dass** sie zusätzlich Hopfen oder Hopfenderivate enthält.

20. Zucker oder zuckerhaltiges Produkt aus pflanzlichen Rohstoffen, wobei das zuckerhaltige Produkt ausgewählt ist aus der Gruppe bestehend aus Rübenschnitzel-Futtermittel, Carbokalk, Dicksaft und Melasse, erhältlich nach einem Verfahren nach einem der Ansprüche 1 bis 18 mit einem Gehalt an zugesetzten natürlichen Baumharzen, insbesondere Kolophonium oder Kolophoniumderivate.

21. Verwendung von natürlichen Baumharzen, insbesondere Kolophonium oder Kolophoniumderivate, im Zuge des industriellen Zuckerherstellungsprozesses.

22. Verwendung nach Anspruch 21 zur Hemmung thermophiler und osmotoleranter Mikroorganismen, insbesondere zur Hemmung von Bacillus-, Thermus- und/oder Chlostridien-Arten.

## Claims

1. A method for the production of sugar or sugar-containing products from sugar-containing plant raw materials, **characterised in that** said production is at least partially carried out in the presence of added natural food-compatible resins, tree resins being used as said natural resins.

2. A method according to claim 1, **characterised in that** colophony or colophony derivatives are used as said natural resins.

3. A method according to claim 1 or 2, **characterised in that** said natural resins are used in amounts ranging from 0.1 to 1000 mg/l, preferably 5 to 40 mg/l, in particular 10 to 25 mg/l.

4. A method according to any one of claims 1 to 3, **characterised in that** said natural resins are added as salt-containing solutions or suspensions, preferably as potassium salt solution, particularly as 0.5 to 35% potassium salt solution, or as sodium salt solution, particularly as 0.5 to 35% sodium salt solution.

5. A method according to any one of claims 1 to 4, **characterised in that** said natural resins are added as 5 to 20% salt-containing solutions or suspensions.

6. A method according to any one of claims 1 to 5, **characterised in that** said natural resins are added as alcoholic solution or suspension, preferably as 1 to 95%, particularly 10 to 80%, ethanol solution.

7. A method according to any one of claims 1 to 6, **characterised in that** said natural resins are used in combination with further antimicrobial agents.

8. A method according to any one of claims 1 to 7, **characterised in that** said natural resins are used in combination with further food-compatible antimicrobial agents, particularly in combination with hops or hop derivatives.

9. A method according to any one of claims 1 to 8, **characterised in that** said natural resins are added in dry or pasty forms.

10. A method according to any one of claims 1 to 9, **characterised in that** said natural resins are used at least in the thermal extraction of sugar-containing plant parts, particularly sugar beets or sugar cane.

11. A method according to any one of claims 1 to 10, **characterised in that** said natural resins are added to the plant parts to be extracted after the mechanical disintegration of the sugar-containing plant raw materials.

12. A method according to any one of claims 1 to 11, **characterised in that** said natural resins are added to the extraction solution by which the sugar is extracted from the sugar-containing plant raw materials.

13. A method according to any one of claims 1 to 12, **characterised in that** said natural resins are used in the purification of the raw juice.

14. A method according to any one of claims 1 to 13, **characterised in that** said natural resins are used at least during membrane treatment procedures and/or ion exchange procedures.

15. A method according to any one of claims 1 to 14, **characterised in that** said natural resins are used at a sugar concentration of from 0.1 to 80% and, in particular, at a temperature ranging from 50 to 80°C.

16. A method according to any one of claims 1 to 15, **characterised in that** said natural resins are used at a sugar concentration of from 60 to 70% and, in particular, at a temperature of from 10 to 30°C.

17. A method according to any one of claims 1 to 16, **characterised in that** said natural resins are used during the recovery of the sugar from the thick juice.

18. The use of an extraction liquid containing natural food-compatible tree resins, in particular colophony or colophony derivatives, for the extraction of sugar-containing plant raw materials in the course of the industrial sugar-production process.

19. The use of an extraction liquid according to claim 18, **characterised in that** it additionally contains hops or hop derivatives.

20. A sugar or a sugar-containing product made of plant raw materials, said sugar-containing product being selected from the group consisting of beet-chip fodder, carbolime, thick juice and molasses, obtainable by a method according to any one of claims 1 to 18 and having a content of added natural tree resins, in particular colophony or colophony derivatives.

21. The use of natural tree resins, in particular colophony or colophony derivatives, in the course of the industrial sugar-production process.

22. The use according to claim 21 for the inhibition of thermophilic and osmotolerant microorganisms, in particular, for the inhibition of bacillus, thermus and/or chlostridia species.

## Revendications

1. Procédé de préparation de sucre ou de produits sucrés à partir de matières premières végétales saccharifères, **caractérisé en ce que** l'on effectue la préparation au moins en partie en présence de résines naturelles ajoutées compatibles pour l'alimentation, en utilisant comme résines naturelles de la résine d'arbres.

2. Procédé selon la revendication 1, **caractérisé en ce que** l'on utilise de la colophane ou des dérivés de colophane comme résines naturelles.

3. Procédé selon la revendication 1 ou 2, **caractérisé en ce que** les résines naturelles sont utilisées en une quantité de 0,1 à 1000 mg/l, de préférence de 5 à 40 mg/l, en particulier de 10 à 25 mg/l.

4. Procédé selon l'une des revendications 1 à 3, **caractérisé en ce que** les résines naturelles sont ajoutées sous forme de solutions ou de suspensions contenant un sel, de préférence sous forme d'une solution de sel de potassium, en particulier sous forme d'une solution de sel de potassium à 0,5 à 35 %, ou sous forme d'une solution de sel de sodium, en particulier sous forme d'une solution de sel de sodium à 0,5 à 35%.

5. Procédé selon l'une des revendications 1 à 4, **caractérisé en ce que** les résines naturelles sont ajoutées sous forme de solutions ou de suspensions contenant un sel à 5 à 20 %.

6. Procédé selon l'une des revendications 1 à 5, **caractérisé en ce que** les résines naturelles sont ajoutées sous forme d'une solution ou d'une suspension alcoolique, de préférence sous forme d'une solution éthanolique à 1 à 95 %, en particulier à 10 à 80 %.

7. Procédé selon l'une des revendications 1 à 6, **caractérisé en ce que** les résines naturelles sont utilisées en combinaison avec d'autres agents antimicrobiens.

8. Procédé selon l'une des revendications 1 à 7, **caractérisé en ce que** les résines naturelles sont utilisées avec d'autres agents antimicrobiens compatibles pour l'alimentation, en particulier en combinaison avec du houblon ou des dérivés de houblon.

9. Procédé selon l'une des revendications 1 à 8, **caractérisé en ce que** les résines naturelles sont ajoutées à l'état sec ou pâteux.

10. Procédé selon l'une des revendications 1 à 9, **caractérisé en ce que** les résines naturelles sont utilisées au moins dans l'extraction thermique de parties de plantes saccharifères, en particulier de betteraves à sucre ou de canne à sucre.

11. Procédé selon l'une des revendications 1 à 10, **caractérisé en ce que** les résines naturelles sont ajoutées aux parties de plantes à extraire après le broyage mécanique des matières premières végétales saccharifères.

12. Procédé selon l'une des revendications 1 à 11, **caractérisé en ce que** les résines naturelles sont ajoutées à la solution d'extraction avec laquelle le sucre est extrait des matières premières végétales saccharifères.

13. Procédé selon l'une des revendications 1 à 12, **caractérisé en ce que** les résines naturelles sont utilisées lors de la purification du jus brut.

14. Procédé selon l'une des revendications 1 à 13, **caractérisé en ce que** les résines naturelles sont utilisées au moins pendant un procédé de traitement avec une membrane et/ou un procédé d'échange d'ions.

15. Procédé selon l'une des revendications 1 à 14, **caractérisé en ce que** les résines naturelles sont utilisées avec une concentration de sucre de 0,1 à 80 %, en particulier à une température de 50 à 80°C.

16. Procédé selon l'une des revendications 1 à 15, **caractérisé en ce que** les résines naturelles sont utilisées avec une concentration de sucre de 60 à 70 %, en particulier à une température de 10 à 30°C.

17. Procédé selon l'une des revendications 1 à 16, **caractérisé en ce que** les résines naturelles sont utilisées pendant la récupération du sucre à partir du sirop.

18. Utilisation d'un liquide d'extraction contenant des résines naturelles d'arbres compatibles pour l'alimentation, en particulier de la colophane ou des dérivés de colophane, pour l'extraction de matières premières végétales saccharifères au cours du procédé industriel de production de sucre.

19. Utilisation d'un liquide d'extraction selon la revendication 18, **caractérisée en ce qu'**il contient en outre du houblon ou des dérivés de houblon.

20. Sucre ou produit sucré provenant de matières premières végétales, le produit sucré étant choisi dans le groupe constitué par l'aliment pour bétail constitué de cossettes de betterave, de l'écume, du sirop et de la mélasse pouvant être obtenus après un procédé selon l'une des revendications 1 à 18, contenant des résines naturelles d'arbres ajoutées, en particulier de la colophane ou des dérivés de colophane.

21. Utilisation de résines naturelles d'arbres, en particulier de colophane ou de dérivés de colophane, au cours du procédé industriel de production de sucre.

22. Utilisation selon la revendication 21, destinée à inhiber les micro-organismes thermophiles et osmotolérants, en particulier à inhiber des espèces de *Bacillus, Thermus* et/ou *Clostridium.*
